# EUROPEAN PATENT SPECIFICATION

(11) **EP 2 853 960 B1**
(45) Date of publication and mention of the grant of the patent: **17.06.2020**
(21) Application number: 14186279.7
(22) Date of filing: 24.09.2014
(51) Int. Cl.: G04G 17/04, G06F 1/16, G04G 9/00, B63C 11/02, G04G 21/02

(54) **WRISTCOMPUTER FOR DIVERS**
ARMBANDRECHNER FÜR TAUCHER
ORDINATEUR-BRACELET POUR PLONGEURS

(30) Priority: 25.09.2013 IT GE20130094
(43) Date of publication of application: 01.04.2015
(73) Proprietor: Cressi-Sub S.p.A., 16165 Genova (IT)
(72) Inventor: GODOY, Carlos Alberto, 16148 GENOVA (IT)
(74) Representative: Porsia, Attilio

(56) References cited:
- EP-A1- 0 500 386
- EP-A2- 0 195 636
- US-A- 5 835 343

## Description

The present invention relates to wrist computers used by divers while diving.

As is known, for both so-called sports or recreational diving, i.e. at modest depths, and professional diving, divers equip themselves with wrist computers through which they keep a certain amount of information under control, for example, the depth and immersion time, temperature, air consumption, the duration of the decompression stops during the ascent. Naturally, there are many models of wrist computer for divers, but in spite of this, the main elements that form them are usually the following: a lower case inside which an electronic board for controlling the various functions of the watch is housed; a power supply battery, usually housed in a sealed cover located beneath the case; a display for displaying data; a backlight element for the display; spacers made of an insulating material, for example, plastic, suitable for maintaining an adequate distance between the electronic board and the backlight element; an acoustic resonator; a protective glass for the display; and a closing lid that is permanently fastened to the lower case, making the wrist computer waterproof and no longer openable without replacing the case and the lid.

The function of the acoustic resonator is to emit acoustic signals with a certain intensity when submerged. These acoustic signals can be emitted, for example, in the event of the diver incorrectly performing or completely skipping a given decompression stop during the ascent. The acoustic resonator therefore has a role of primary importance in wrist computers for divers.

This acoustic resonator is normally housed in a seat obtained inside the lower case of the wrist computer or in the sealed cover housing the battery. The lower case of known wrist computers is usually made of extremely rigid plastic materials, while the cover housing the battery is made of a metal material. The elucidation regarding the rigidity of the case or the cover housing the battery is important as up to now it has always been considered that this resonator must be positioned in contact with a rigid surface in order to perform its functions satisfactorily. Another factor that has caused the resonator to be located inside a housing obtained directly in the case or in the cover is that it is considered necessary to position said acoustic resonator at a certain distance from the backlight element, which needs a relatively high voltage in order to function correctly; in fact, spacers are provided that keep it adequately separated from the electronic board.

Thus, known wrist computers suffer the handicap that this resonator must be located in a dedicated seat, obtained inside the lower case or in the cover housing the battery, and that it must be kept at a distance from the backlight element. A significant drawback for known wrist computers, deriving directly from the two preconceived ideas just mentioned for positioning the acoustic resonator, is that the testing of all the electronic part, including the resonator, can only be performed after the wrist computer has been sealed, and so after the lid has been fastened in a permanent and definitive manner to the lower case. Currently, in the event of test failure, it is necessary to discard the lower case and the lid, actually replacing the waterproof outer casing of the wrist computer in consequence, with evident cost and planning drawbacks.

Other negative aspects of known wrist computers for divers are that the seat for the acoustic resonator, normally obtained inside the lower case of the computer or in the sealed cover housing the battery, entails an increase in thickness of the diving computer.

To all intents and purposes, this bulk and thickness does not allow such wrist computers to be also worn as sports watches out of the water. In addition, despite this bulk, the acoustic resonator that is fitted is quite small when compared to the overall dimensions of the wrist computer, whilst an acoustic resonator of the largest possible size should be provided, as the larger the size of the resonator, the greater the intensity of the sound that they can emit.

The object of the present invention is therefore to provide a wrist computer for divers that overcomes the previously mentioned preconceived ideas and drawbacks of known wrist computers, which can be tested without the need to seal it, which has an acoustic resonator that can be placed directly on the electronic part of the computer and not necessarily on the case or the cover, and which also has small overall size and thickness, essentially the size of a normal sports wristwatch.

This object is achieved by the present invention by means of a wrist computer as claimed in claim 1.

Advantageously, in the wrist computer for divers according to the present invention, the acoustic resonator is housed directly in the electronic module, which can thus be tested and controlled before the case is sealed with the associated lid.

Furthermore, as the acoustic resonator is inserted directly inside the electronic module, it can be powered directly by connectors provided in this electronic module and projecting from the electronic board, without the need of cables or equivalent items.

The resonator thus works in a very efficient manner, even if it is contact with a notoriously flexible element such as the backlight element, and even if the latter is powered by relatively high voltages.

This acoustic resonator is preferably positioned in contact with the rear surface of the backlight element and it is fastened to the latter by glueing.

Furthermore, this wrist computer advantageously comprises a single thin spacer element, made of an insulating material, which is positioned between the backlight element and the electronic board of the electronic module.

This spacer could be provided with internally protruding elements so as to make contact with the periphery of the acoustic resonator and keep it in the correct position. The acoustic resonator could also be fastened to these protruding elements of the spacer by mechanical elements or by gluing.

Advantageously, this wrist computer comprises a single support frame equipped with removable fastening elements for the electronic board and possibly provided with an internal polygonal shape matching the polygonal shape with which the backlight element might be made.

Further characteristics and advantages of the present invention will become better understood with reference to the following description, considered by way of non-limitative example, and with reference to the accompanying drawings, where:
- Fig. 1 show a top view of a wrist computer for divers according to the present invention;
- Fig. 2 shows a view from below of the case of the wrist computer shown in Fig. 1 fitted with a sealed lower cover;
- Fig. 3 shows a first exploded view of the main parts forming the wrist computer;
- Fig. 4 shows a second exploded view of the electronic module provided inside this wrist computer.

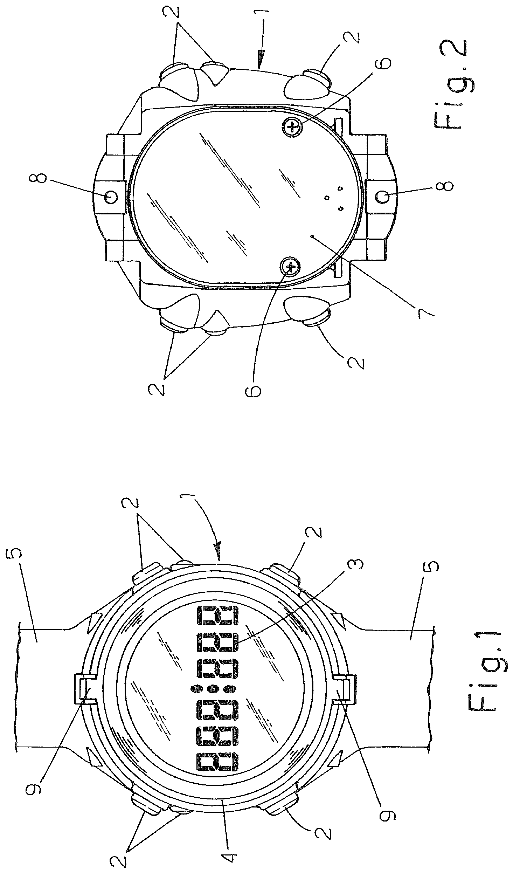

With reference to the accompanying drawings and with particular reference to Fig. 1 thereof, reference numeral 1 indicates the lower case of a wrist computer for divers according to the present invention. A series of buttons 2 are positioned on this case that allow the user to set and display the various data items normally handled and processed by wrist computers for divers. A display 3, of the LCD type for example, is positioned in the central part of the lower case 1 to allow the display of data. The case 1 engages with an upper lid 4 by means of a joint. Naturally, this wrist computer will be equipped with a normal wristband 5, partially shown on two directly opposite sides of the case 1. The case 1 is sealed by the final insertion of the lid 4 thereon.

In Fig. 2, it can be observed that a sealed cover 7, useful for insertion and replacement of the wrist computer's battery, is fastened to the case 1 from below by screws 6. The seats 8 shown in directly opposite positions on the case 1 are suitable to allow the fastening of the upper lid 4 shown in Fig. 1.

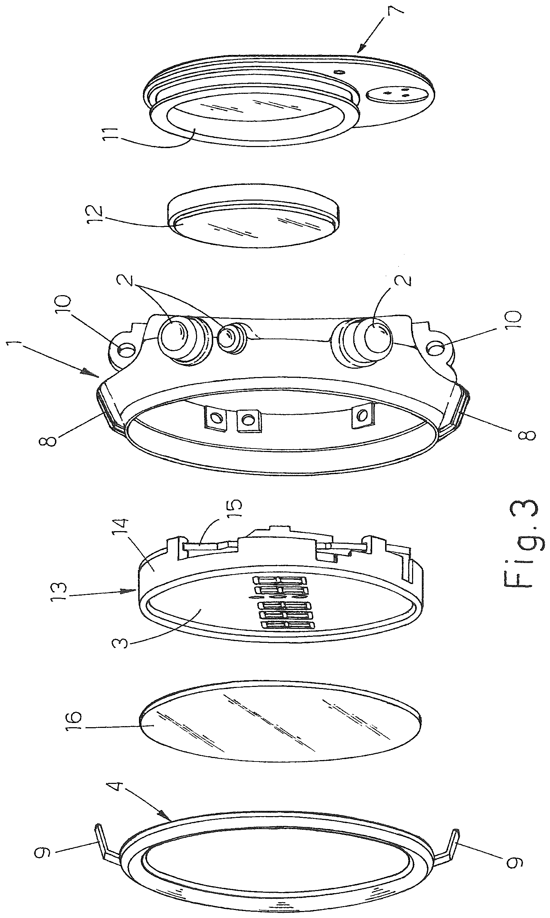

These two seats 8 for fastening the lid 4 are also visible in the exploded view in Fig. 3, the lid 4, in this regard, being equipped with opportune radially protruding tongues 9 suitable for engaging these seats 8. In addition to these seats 8, the case 1 also comprises annular supports 10 for mounting the wristband 5 in Fig. 1. The sealed cover 7 is equipped with a housing 11 for the battery 12 of the wrist computer, while an electronic module 13, of which a circular frame 14 for supporting an electronic board 15 and the display 3 is visible, can be positioned inside the case 1. A protective glass 16 will be placed over the display 3.

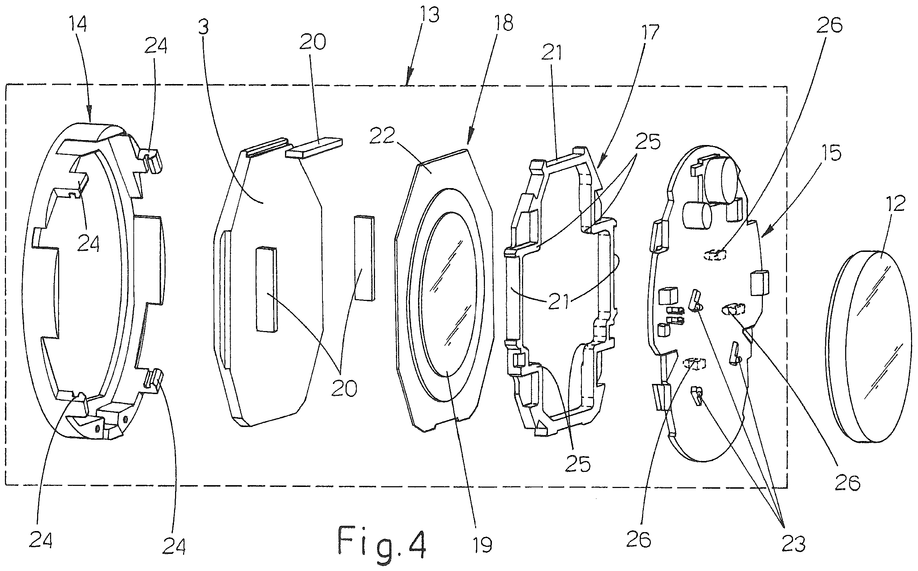

As can be seen in Fig. 4, the electronic module 13 comprises: the electronic board 15, in which, amongst other things, the contacts 23 for the battery 12 are present and which protrude from opportune holes made in the bottom of the case 1; a spacer 17 made of an insulating material, plastic for example, opportunely shaped and advantageously of limited thickness; a backlight element 18 for the display 3, this element typically being composed of two sheets of a flexible plastic substance between which a sheet of silver is positioned; an acoustic resonator 19 in contact with the rear surface 22 of said backlight element 18; the display 3 cooperating with a plurality of electrical connectors 20, three for example, for connecting it to the electronic board 15; and the support frame 14. The spacer 17 internally comprises four corners 25 protruding in a radial direction and able to make contact with the periphery of the acoustic resonator 19, so as to keep it in position against the backlight element 18 when the electronic module 13 is closed as in Fig. 2. Naturally, the number and position of these corners 25 could also be different from that shown. As may be noted, seats 21 for housing said electrical contacts 20 are made in the spacer 17. The electronic board 15 will be snap-fitted into the associated frame 14 through the positioning of a plurality, four for example, of coupling elements 24 on the latter, which protrude from the back thereof and engage with the edge of said electronic board 15. The resonator 19 is electrically powered by the battery 12 and through the electronic board 15, and so, on the opposite surface of this electronic board 15 with respect to that where the contacts 23 are housed, other normal electrical contacts 26, shown with dashed lines, are provided that will have the right thickness to pass through the free central area of the spacer 17 and make contact with the resonator.

As mentioned, the resonator 19 is in contact with the rear surface 22 of the backlight element 18, which is electrically powered by the electronic board 15 and usually needs a correct voltage for optimal operation. It is possible to use an adhesive material, glue for example, to keep resonator 19 correctly in position on the rear surface 22 of the backlight element 18. Alternatively, the resonator 19 could be fastened to said element 18 by a mechanical support system, or it could glued or mechanically fastened to the spacer 17, for example, to the corners 25 shown in Fig. 4. The backlight element 18 is provided with an opportune polygonal shape, hexagonal for example, suitable for ensuring correct positioning in a corresponding seat that can be made inside the rim of the support frame 14.

In all types of diving wrist computers, the function of the resonator 19 is to emit acoustic signals that the diver can clearly hear when underwater. With this wrist computer, the resonator 19 can be made quite large with respect to the case 1, possibly even occupying the entire rear surface of the backlight element 18 and therefore substantially covering the electronic board 15. This is a very important advantage, because the size of the resonator 19 affects the intensity of the sounds and signals emitted; in practice, the larger its size, the greater the emitted sound intensity. This advantage becomes even more important if it is considered that wrist computers for divers are normally quite large, yet equipped with a rather small resonator, as mentioned in the introductory part of this description. By having the resonator 19 in direct contact with the backlight element 18, this diver's wrist computer can have optimal size, both in width and thickness, also aided by the very small thickness of the spacer element.

In addition, due to the housing of the resonator 19 being in direct contact with the backlight element 18, it is advantageously possible to carry out the normal tests and inspections necessary on the electronic module 13 without the need to seal the wrist computer with the lid 4 placed permanently on the case 1. It should be remembered that in known wrist computers, in the event of test failure, it is necessary to replace the case 1 and the lid 4, with evident cost and planning drawbacks. Thus, testing and inspection can be carried out with this wrist computer for divers before sealing the case 1 with the lid 4.

Another advantage of this wrist computer can be deduced by observing the accompanying figures: since making dedicated seats and housings for the resonator in the case or even in the sealed cover for the battery is avoided, and since everything is made extremely compact by the direct positioning of the resonator on the backlight element, the wrist computer according to the invention appears to be a wristwatch from the size and aesthetic viewpoint, clearly with marked and substantial technical characteristics, such that it can also be worn outside of the diving application context. As is known, wrist computers for divers normally have large shapes, sizes and thicknesses, which compromise possible use as a wristwatch.

## Claims

1. A wrist computer for divers, comprising a lower case (1), a power-supply battery (12) and an electronic module (13) equipped with at least one electronic board (15) for data processing, a display (3) for displaying data and a backlight element (18) associated with said display (3), said electronic module (13) being houseable in said case (1) in a sealed manner, and said electronic board (15) and said backlight element (18) being powered by means of said battery (12), comprising an acoustic resonator (19) positioned inside said electronic module (13), said resonator (19) being electrically powered through said electronic board (15), **characterized by** the fact that
said acoustic resonator (19) is positioned in contact with and glued to the rear surface (22) of the backlight element (18), and by the fact
that it comprises a single spacer element (17) made of an insulating material and of reduced thickness arranged between said backlight element (18) and said electronic board (15), with seats (21) for housing electrical connectors (20) being provided on said spacer element (17).

2. The wrist computer for divers according to claim 1, **characterized in that** said spacer element (17) comprises internally protruding elements (25) able to make contact with at least the periphery of the acoustic resonator (19) and keep it in position.

3. The wrist computer for divers according to claim 1, **characterized in that** said acoustic resonator is fastened to said single spacer element (17) of reduced thickness.

4. The wrist computer for divers according to claim 1, **characterized in that** the electronic module (13) comprises a single support frame (14) equipped with removable elements (24) for fastening the electronic board (15).

5. The wrist computer for divers according to claim 1, **characterized in that** said backlight element (18) has a polygonal shape suitable for being inserted in an associated polygonal seat made in the support frame (14).

## Patentansprüche

1. Ein Armbandrechner für Taucher, welcher jeweils ein unteres Gehäuse (1), eine Stromversorgungsbatterie (12) und ein Elektronikmodul (13) umfasst, das mit mindestens einer Leiterplatte (15) zur Datenverarbeitung, einem Display (3) zur Angabe der Daten und einer Hintergrundbeleuchtungseinheit (18) ausgerüstet ist, die mit dem genannten Display (3) zugeordnet ist, wobei das genannte Elektronikmodul (13) in abgedichteter Weise in dem genannten Gehäuse (1) untergebracht werden kann, und die genannte Leiterplatte (15) und die genannte Hintergrundbeleuchtungseinheit (18) durch die genannte Batterie (12) mit Strom versorgt werden, welche einen akustischen Resonator (19) umfasst, der sich in dem genannten Elektronikmodul (13) befindet, wobei der genannte Resonator (19) elektrisch durch die genannte Leiterplatte (15) angetrieben wird, **dadurch gekennzeichnet, dass**
der genannte akustische Resonator (19) jeweils so angeordnet ist, dass er sich in Kontakt und verklebt mit der hinteren Oberfläche (22) der Hintergrundbeleuchtungseinheit (18) befindet, sowie dadurch, dass er ein einzelnes Distanzstück (17) umfasst, das aus Isoliermaterial besteht und von verringerter Stärke ist und zwischen der genannten Hintergrundbeleuchtungseinheit (18) und der genannten Leiterplatte (15) angeordnet ist, mit Sitzen (21) für die Unterbringung entsprechender elektrischer Verbinder (20), welche jeweils an dem genannten Distanzstück (17) vorgesehen sind.

2. Der Armbandrechner für Taucher gemäß Anspruch 1, **dadurch gekennzeichnet, dass** das genannte Distanzstück (17) jeweils innen vorstehende Elemente (25) umfasst, welche in der Lage sind, zumindest mit der Peripherie des akustischen Resonators (19) in Kontakt zu treten und ihn in Stellung zu halten.

3. Der Armbandrechner für Taucher gemäß Anspruch 1, **dadurch gekennzeichnet, dass** der genannte akustische Resonator an dem genannten einzelnen Distanzstück (17) von verringerter Stärke befestigt ist.

4. Der Armbandrechner für Taucher gemäß Anspruch 1, **dadurch gekennzeichnet, dass** das Elektronikmodul (13) ein einzelnes Traggestell (14) umfasst, welches jeweils mit entfernbaren Elementen (24) zur Befestigung der Leiterplatte (15) ausgerüstet ist.

5. Der Armbandrechner für Taucher gemäß Anspruch 1, **dadurch gekennzeichnet, dass** die genannte Hintergrundbeleuchtungseinheit (18) eine polygonale Form aufweist, die geeignet ist, in einen entsprechenden polygonalen Sitz eingesetzt zu werden, welcher sich in dem Traggestell (14) befindet.

## Revendications

1. Ordinateur-bracelet pour plongeurs, comprenant un boîtier inférieur (1), une batterie d'alimentation électrique (12) et un module électronique (13) équipé avec au moins une carte électronique (15) pour le traitement de données, un écran (3) pour l'affichage de données et un élément de rétroéclairage (18) associé audit écran (3), ledit module électronique (13) pouvant être logé dans ledit boîtier (1) de manière étanche, et ladite carte électronique (15) et ledit élément de rétroéclairage (18) étant alimentés au moyen de ladite batterie (12), comprenant un résonateur acoustique (19) positionné dans ledit module électronique (13), ledit résonateur (19) étant électriquement alimenté à travers ladite carte électronique (15), **caractérisé en ce que**
ledit résonateur acoustique (19) est positionné en contact avec et collé sur la surface arrière (22) de l'élément de rétroéclairage (18), et **en ce**
**qu'**il comprend un seul élément d'espacement (17) composé d'un matériau isolant et d'épaisseur réduite disposé entre ledit élément de rétroéclairage (18) et ladite carte électronique (15), avec des assises (21) pour loger des connecteurs électriques (20) étant prévues sur ledit élément d'espacement (17).

2. Ordinateur-bracelet pour plongeurs selon la revendication 1, **caractérisé en ce que** ledit élément d'espacement (17) comprend des éléments saillants en interne (25) aptes à établir un contact avec au moins la périphérie du résonateur acoustique (19) et à le maintenir en position.

3. Ordinateur-bracelet pour plongeurs selon la revendication 1, **caractérisé en ce que** ledit résonateur acoustique est fixé audit seul élément d'espacement (17) d'épaisseur réduite.

4. Ordinateur-bracelet pour plongeurs selon la revendication 1, **caractérisé en ce que** le module électronique (13) comprend un seul cadre de support (14) équipé avec des éléments amovibles (24) pour fixer la carte électronique (15).

5. Ordinateur-bracelet pour plongeurs selon la revendication 1, **caractérisé en ce que** ledit élément de rétroéclairage (18) a une forme polygonale appropriée pour être inséré dans une assise polygonale associée réalisée dans le cadre de support (14).
